# EUROPÄISCHE PATENTSCHRIFT

(11) **EP 0 490 019 B1**
(45) Veröffentlichungstag und Bekanntmachung des Hinweises auf die Patenterteilung: **07.07.1993**
(21) Anmeldenummer: 90890321.4
(22) Anmeldetag: 12.12.1990
(51) Int. Cl.: B60D 1/02

(54) **Anhängekupplung**
Trailer coupling
Attelage de remorque

(43) Veröffentlichungstag der Anmeldung: 17.06.1992
(73) Patentinhaber: Scharmüller, Josef, A-4870 Vöcklamarkt (AT)
(72) Erfinder: Scharmüller, Josef, A-4870 Vöcklamarkt (AT)
(74) Vertreter: Hübscher, Heiner, Dipl.-Ing.

(56) Entgegenhaltungen:
- DE-A- 3 016 247
- DE-C- 696 161
- DE-C- 906 662
- FR-A- 442 434

## Beschreibung

Die Erfindung bezieht sich auf eine Anhängekupplung, mit einem ein Kupplungsmaul bildenden Kupplungsgehäuse, in dem ein in das Kupplungsmaul eingreifender Kupplungsbolzen verschiebbar geführt und über einen handhebelbestückten Betätigungshebel gegen Federkraft aus einer das Kupplungsmaul durchragenden Schließstellung in eine das Kupplungsmaul freigebende Offenstellung anhebbar ist, wobei mit dem Betätigungshebel ein den Kupplungsbolzen in Schließstellung sichernder Sicherungshebel zusammenwirkt und vorzugsweise ein federbelasteter, über einen Auslösegriff und/oder einen in das Kupplungsmaul vorragenden Auslösearm verschwenkbarer Sperrhebel den Betätigungshebel in Offenstellung festhält.

Wie aus der DE-PS 32 26 360 und den DE-OSen 33 45 474 und 34 00 707 hervorgeht, ist bisher bei solchen Anhängekupplungen zwischen dem Betätigungshebel und dem Kupplungsbolzen ein eigener Ausrückhebel zwischengeordnet, der durch ein Verschwenken des Betätigungshebels aus einer Grundstellung mitgenommen wird und seinerseits den Kupplungsbolzen aus der Schließstellung in die Offenstellung hebt. Dieser Ausrückhebel wirkt in seiner federbelasteten Grundstellung gleichzeitig auch als Sicherungshebel für den Kupplungsbolzen, so daß die Kupplungsbetätigung und die Kupplungssicherung von einem einzigen zwischengelagerten Hebel abhängen. Diese bekannten Kupplungen sind daher recht störanfällig und, da der Betätigungshebel und der Ausrückhebel federbelastet werden müssen und der Betätigungshebel und der Ausrückhebel mittels Nocken, Anlaufbahnen und Abstützkerben od. dgl. zusammenwirken, mit erheblichem Bau- und Konstruktionsaufwand verbunden.

Der Erfindung liegt daher die Aufgabe zugrunde, diese Mängel zu beseitigen und eine Anhängekupplung der eingangs geschilderten Art zu schaffen, die sich bei verhältnismäßig einfacher Konstruktion und Bauweise durch ihre besondere Funktionssicherheit auszeichnet.

Die Erfindung ist durch die Merkmale des Anspruchs 1 gelöst. Hierbei weist der Betätigungshebel einen Mitnehmerfinger zum unmittelbaren Ansatz an einem Mitnehmeranschlag des Kupplungsbolzens auf und der Sicherungshebel ist als einerseits am Kupplungsbolzen drehbar, anderseits am Betätigungshebel über ein Langloch dreh- und verschiebbar angelenkte Lasche vorgesehen, die sich in Schließstellung mit einer Stützfläche ihrer dem Kupplungsbolzen abgewandten Stirnseite an einer Gegenfläche des Kupplungsgehäuses anlegt. Durch den Mitnehmerfinger des Betätigungshebels kann der Kupplungsbolzen direkt ohne Zwischenschalten eines Ausrückhebels vom Betätigungshebel angehoben und aus der Schließstellung in die Offenstellung gebracht werden, so daß der zusätzliche Sicherungshebel nur eine Sicherungsfunktion und keine Betätigungsfunktion mehr auszuüben braucht. Da außerdem der Sicherungshebel als Lasche zwischen Kupplungsbolzen und Betätigungshebel ausgebildet ist, kommt es zu einer Zwangsführung dieser Lasche bei der Betätigungshebelbewegung und es kann für eine exakte Sperrstellung der Lasche und eine exakte Freigabestellung gesorgt werden. In der Sperrstellung stützt sich die Lasche mit ihrer Stützfläche an einer gehäusefesten Gegenfläche ab und diese Abstützung zusammen mit der Laschenanlenkung am Kupplungsbolzen bringt eine sehr spielarme Sicherung des Kupplungsbolzens mit sich, die dadurch auch sehr robust, rüttelfest und störunanfällig ist.

Nach einer besonders vorteilhaften Ausgestaltung der Erfindung bildet der Lagerzapfen für die Laschenlagerung am Kupplungsbolzen den Mitnehmeranschlag, wobei vorzugsweise ein zwischen sich den Mitnehmerfinger des Betätigungshebels aufnehmendes Laschenpaar auf dem Lagerzapfen sitzt. Da die Laschenlagerung gleichzeitig auch als Mitnehmeranschlag dient, ergibt sich eine platzsparende Konstruktion mit einfacher Bolzengestaltung, und die Anordnung eines Laschenpaares führt zu einer Verdoppelung der Sicherung bei symmetrischer Konstruktion und Belastung der Betätigungs- und Sicherungseinrichtungen.

Weist der Betätigungshebel einen mit Abstand oberhalb des Mitnehmerfingers angeordneten Sperrfinger auf, der in Schließstellung dem Kupplungsbolzen als Anhebesperre entgegensteht, wird ohne großen Mehraufwand eine Zusatzsicherung für den Kupplungsbolzen erreicht, die auch im außergewöhnlichen Fall eines Bruches der Lasche bzw. der Laschen ein ungewolltes Öffnen des Kupplungsbolzens verhindert

Wird weiters die Abstützung der Lasche am Kupplungsgehäuse so gewählt, das die Resultierende der Abstützkräfte zwischen Laschen-Stützfläche und Kupplungsgehäuse-Gegenfläche unter die Laschen-Anlenkachse am Kupplungsbolzen gerichtet ist, kommt es bei einer Kupplungsbolzenbelastung im Öffnungssinn zu einer selbsthemmenden Wirkung, da die Abstützkräfte auf die Lasche ein Gegenmoment zur Öffnungsbewegung ausüben und die Sperrwirkung der Lasche verstärken.

Die Lasche kann mit ihrer Stützfläche an einer entsprechenden Gehäusenase od. dgl. als Gegenfläche abgestützt sein, es ist aber auch möglich, daß ein im Kupplungsgehäuse eingesetzter Stützbolzen die Gegenfläche für die Laschen-Stützfläche bildet, um gegebenenfalls die Gehäuseform zu vereinfachen oder für die Gegenfläche ein vom Gehäusewerkstoff abweichendes, beispielsweise härteres Material zu wählen.

Um eine anhängeösefreie Kupplung in Offenstellung halten zu können, gibt es einen Sperrhebel, der den Betätigungshebel am Ende seiner Öffnungsbewegung an einer Sperrnase hintergreift und festhält. Über einen Auslösegriff oder einen in das Kupplungsmaul vorragenden Auslösearm ist der Sperrhebel dann händisch oder durch Einschieben einer Anhängeöse in das Kupplungsmaul wieder außer Eingriff zu bringen und der Betätigungshebel zum Kuppeln freigebbar. Weist dabei der Betätigungshebel an seinem dem Mitnehmerfinger gegenüberliegenden Ende eine Sperrnase auf, die in Offenstellung mit einem federnd abgestützten, durch den Sperrhebel ausrückbaren Sperrnocken verrastbar ist, läßt sich der Betätigungshebel in Offenstellung unabhängig von der Stellung des Sperrhebels fangen, da entweder der Sperrnocken oder der Sperrhebel zur Wirkung kommt, so daß der Kupplungsbolzen nach einem Öffnen auch bei noch eingefahrener Anhängeöse in offenstellung gehalten wird. Der Sperrhebel übernimmt dann beim Ausfahren der Öse unter gleichzeitigem Ausrücken des Sperrnockens die Haltefunktion und erlaubt auch wieder ein übliches Freigeben des Betätigungshebels.

In der Zeichnung ist der Erfindungsgegenstand beispielsweise veranschaulicht, und zwar zeigen
- Fig. 1: eine erfindungsgemäße Anhängekupplung mit eingerücktem Kupplungsbolzen im Vertikalschnitt,
- Fig. 2: zwei weitere Funktionsstellungen dieser Anhängekupplung ebenfalls im Vertikalschnitt und
- Fig. 3 und 4: Horizontalschnitte nach den Linien III-III bzw. IV der Fig. 1.

Eine Anhängekupplung 1 besteht aus einem Kupplungsgehäuse 2, das ein Kupplungsmaul 3 zur Aufnahme einer Anhängeöse A und eine Führung 4 für einen in das Kupplungsmaul 3 eingreifenden Kupplungsbolzen 5 bildet. Zum Anheben des Kupplungsbolzens 5 gibt es einen Betätigungshebel 6, der drehfest auf einer im Kupplungsgehäuse 2 gelagerten, in einen Handgriff 7 auslaufenden und über eine Feder 8 im Schließsinne belasteten Betätigungswelle 9 sitzt und einen kupplungsbolzenseitig vorragenden Mitnehmerfinger 10 zum unmittelbaren Ansatz an einen Mitnehmeranschlag des Kupplungsbolzens 5 aufweist, wobei als Mitnehmeranschlag ein eine schlitzförmige Ausnehmung 11 des Kupplungsbolzens 5 durchquerender Lagerzapfen 12 dient. Als Sicherungshebel ist ein Laschenpaar 13 vorgesehen, das einerseits drehbar am Lagerzapfen 12 angreift und anderseits mit einem durch ein Langloch 14 im Betätigungshebel 6 geführten Anlenkbolzen 15 dreh- und verschiebbar am Betätigungshebel 6 angelenkt ist. Die Laschen 13, die zwischen sich Platz für den Ansatz des Mitnehmerfingers 10 am Lagerbolzen 12 freilassen, besitzen an ihrer dem Kupplungsbolzen abgewandten Stirnseite eine Stützfläche 16, die sich in Schließstellung an einer Gegenfläche 17 des Kupplungsgehäuses 2 abstützen lassen.

Um die Anhängekupplung 1 in Offenstellung halten zu können, gibt es einen Sperrhebel 18, der an einer Sperrnase 19 des Betätigungshebels 6 in Offenstellung einrastet und ein Rückschwenken des Betätigungshebels verhindert. Dieser Sperrhebel 18 kann über einen Auslösegriff 20 händisch oder über einen in das Kupplungsmaul 3 vorragenden Auslösearm 21 durch das Einschieben einer Anhängeöse A gegen die Kraft einer Sperrfeder 22 ausgelöst werden und gibt dann den Betätigungshebel 6 wieder frei. Als zusätzliche Verriegelung ist außerdem ein Sperrnocken 23 federnd im Kupplungsgehäuse 2 abgestützt, der mit der Sperrnase 9 des Betätigungshebels 6 verrastet, wenn der Sperrhebel 18 durch eine im Kupplungsmaul 3 sich befindende Anhängeöse A in seiner Freigabestellung gehalten ist. Der Sperrnocken 23 ist dabei mit einer dem Sperrhebel 18 zugeordneten Anlauffläche 24 versehen, so daß eine entsprechende Sperrhebelbewegung den Sperrnocken 23 außer Eingriff bringt und der Sperrhebel 18 selbst wieder wirksam wird.

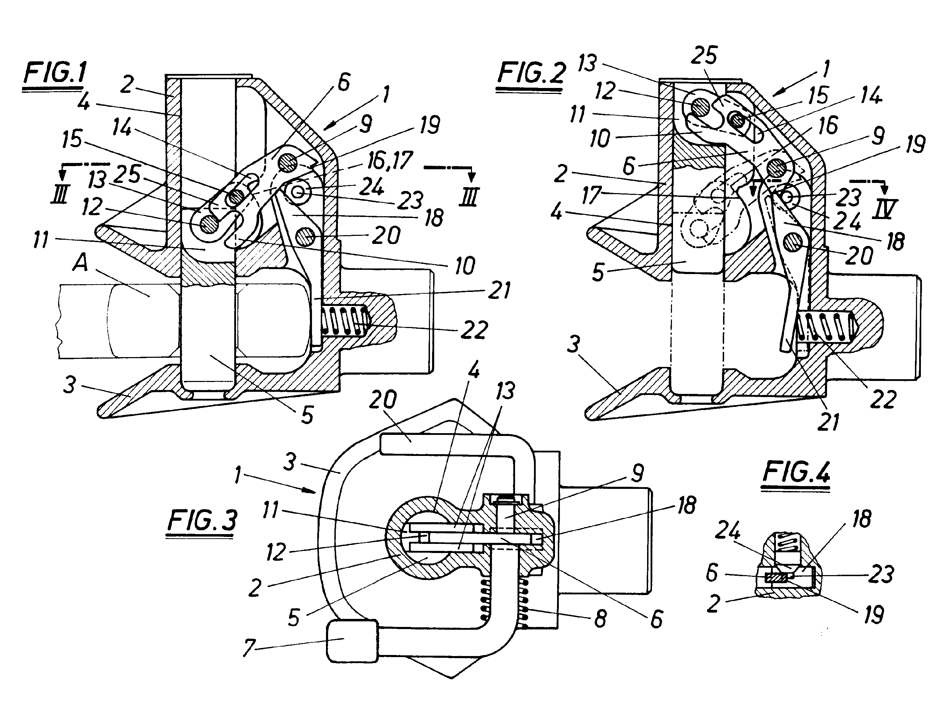

Ist die Anhängekupplung 1 in Kupplungsstellung, befindet sich der Kupplungsbolzen 5 in seiner das Kupplungsmaul 3 durchragenden und eine nur angedeutete Anhängeöse A arretierenden Schließstellung (Fig. 1). In dieser Schließstellung stützt sich das Laschenpaar 13 über seine Stützfläche 16 an der gehäuseseitigen Gegenfläche 17 ab und sichert den Kupplungsbolzen 5 gegen ein ungewolltes Anheben. Der Betätigungshebel 6 ist abgeschwenkt und der Mitnehmerfinger 10 liegt mit Abstand unterhalb des Lagerzapfens 12, wobei ein zusätzlich zum Mitnehmerfinger 10 am Betätigungshebel 6 vorgesehener Sperrfinger 25 dem Lagerbolzen 12 gegenübersteht und eine zusätzliche Abhebesperre für den Kupplungsbolzen 5 ergibt. Die Kupplung ist durch das Laschenpaar, den Sperringer und außerdem durch ein von den Stützkräften zwischen Stütz- und Gegenfläche 16, 17 auf die Laschen 13 ausgeübtes Drehmoment um den Lagerzapfen 12 gegen eine Abhebebewegung des Kupplungsbolzens 5 mehrfach gesichert.

Beim Öffnen der Anhängekupplung wird der Betätigungshebel 6 mittels des Handgriffes 7 hochgeschwenkt und bewegt sich vorerst bis zur Anlage des Mitnehmerfingers 10 am Lagerzapfen 12 aufwärts, ohne den Kupplungsbolzen 5 mitzubewegen. Während dieser ersten Schwenkphase wird aber über die Langlochverbindung 14, 15 das Laschenpaar 13 hochgeschwenkt und dessen Stützflächen 16 von der Gegenfläche 17 des Kupplungsgehäuses 2 abgehoben, so daß die Kupplungssicherung gelöst ist (strichpunktierte Stellung in Fig. 2).

Ein Weiterverschwenken des Betätigungshebels 6 führt dann auf Grund des Zusammenwirkens von Mitnehmerfinger 10 und Lagerzapfen 12 zu einem Anheben des Kupplungsbolzens 5, der bis zur Offenstellung (Fig. 2) in der Führung 4 hochgehoben wird und die Anhängeöse A freigibt. Beim Erreichen der Offenstellung verrastet auch die Sperrnase 19 mit dem Sperrnocken 24 und der Betätigungshebel 6 hält den Kupplungsbolzen 5 in seiner Offenstellung fest. Wird nun die Anhängeöse A aus dem Kupplungsmaul 3 herausgezogen, drückt die Sperrfeder 22 über den Auslösearm 21 den Sperrhebel 18 in Sperrstellung, in der der Sperrhebel 18 den Sperrnocken 23 durch Aufgleiten auf die Anlauffläche 24 zurückdrängt und selbst die Sperrnase 19 des Betätigungshebels 6 hintergreift und festhält. Damit bleibt der Kupplungsbolzen 5 in seiner Offenstellung arretiert, bis der Sperrhebel 18 händisch oder durch Einfahren einer Anhängeöse A betätigt wird.

Wird der Sperrhebel 18 über den Handhebel 20 oder den Auslösesarm 21 betätigt, gibt er den Betätigungshebel 6 frei und auf Grund der Schwerkraft und der Kraft der Feder 8 bewegen sich Kupplungsbolzen 5 und Betätigungshebel 6 in die Schließstellung zurück, wobei auch zwangsweise das Laschenpaar 13 zurückschwenkt und dessen Stützflächen 16 zur Anlage an der Gegenfläche 17 kommen, was wiederum die Sicherung des Kupplungsbolzens 5 in der Schließstellung gewährleistet.

## Patentansprüche

1. Anhängekupplung (1), mit einem ein Kupplungsmaul (3) bildenden Kupplungsgehäuse (2), in dem ein in das Kupplungsmaul (3) eingreifender Kupplungsbolzen (5) verschiebbar geführt und über einen handhebelbestückten Betätigungshebel (6) gegen Federkraft aus einer das Kupplungsmaul (3) durchragenden Schließstellung in eine das Kupplungsmaul (3) freigebende Offenstellung anhebbar ist, wobei mit dem Betätigungshebel (6) ein den Kupplungsbolzen (5) in Schließstellung sichernder Sicherungshebel (13) zusammenwirkt und vorzugsweise ein federbelasteter, über einen Auslösegriff (20) und/oder einen in das Kupplungsmaul (3) vorragenden Auslösearm (21) verschwenkbarer Sperrhebel (18) den Betätigungshebel (6) in Offenstellung festhält, dadurch gekennzeichnet, daß der Betätigungshebel (6) einen Mitnehmerfinger (10) zum unmittelbaren Ansatz an einem Mitnehmeranschlag (12) des Kupplungsbolzens (5) aufweist und der Sicherungshebel als einerseits am Kupplungsbolzen (5) über einen den Kupplungsbolzen (5) durchqerenden Lagerzapfen (12) drehbar, anderseits am Betätigungshebel (6) über einen in einem Langloch (14) geführten Anlenkbolzen (15) dreh- und verschiebbar angelenkte Lasche (13) vorgesehen ist, die sich in zur Gewährleistung der Sicherung des Kupplungsbolzens (5) Schließstellung mit einer Stützfläche (16) ihrer dem Kupplungsbolzen abgewandten Stirnseite an einer Gegenfläche (17) des Kupplungsgehäuses (2) anlegt.

2. Anhängekupplung nach Anspruch 1, dadurch gekennzeichnet, daß der Lagerzapfen (12) für die Laschenlagerung am Kupplungsbolzen (5) den Mitnehmeranschlag bildet, wobei vorzugsweise ein zwischen sich den Mitnehmerfinger (10) des Betätigungshebels (6) aufnehmendes Laschenpaar (13) auf dem Lagerzapfen (12) sitzt.

3. Anhängekupplung nach Anspruch 1 oder 2, dadurch gekennzeichnet, daß der Betätigungshebel (6) einen mit Abstand oberhalb des Mitnehmerfingers (10) angeordneten Sperrfinger (24) aufweist, der in Schließstellung dem Kupplungsbolzen (5) als Anhebesperre entgegensteht.

4. Anhängekupplung nach einem der Ansprüche 1 bis 3, dadurch gekennzeichnet, daß die Resultierende der Abstützkräfte zwischen Laschen-Stützfläche (16) und Kupplungsgehäuse-Gegenfläche (17) unter die Laschen-Anlenkachse (12) am Kupplungsbolzen (5) gerichtet ist.

5. Anhängekupplung nach einem der Ansprüche 1 bis 4, dadurch gekennzeichnet, daß ein im Kupplungsgehäuse eingesetzter Sützbolzen die Gegenfläche für die Laschen-Stützfläche bildet.

6. Anhängekupplung nach einem der Ansprüche 1 bis 5, dadurch gekennzeichnet, daß der Betätigungshebel (6) an seinem dem Mitnehmerfinger (10) gegenüberliegenden Ende eine Sperrnase (19) aufweist, die in Offenstellung mit einem federnd abgestützten, durch den Sperrhebel (18) ausrückbaren Sperrnocken (23) verrastbar ist.

## Claims

1. A trailer coupling (1) comprising a casing (2) forming a jaw (3) and in which a pin (5) is movably guided and engages in the jaw (3) and, by means of an actuating lever (6) equipped with a hand lever, can be raised against spring force from a closed position in which the pin extends through the jaw (3) into an open position in which it releases the jaw (3), and a securing lever (13) which holds the pin (5) in the closed position co-operates with the actuating lever (6) and preferably a spring-loaded locking lever (18) pivotable via a release handle (20) and/or a release arm (21) projecting into the jaw (3) holds the actuating lever (6) in the open position, characterised in that the actuating lever (6) has a driving finger (10) for directly bearing against a driving abutment (12) on the coupling pin (5), and the securing lever is in the form of a cover plate (13) which on the one hand is rotatable on the pin (5) via a pivot (12) extending through the pin (5) and on the other hand is pivoted on the actuating lever (6) so as to be movable and rotatable via a pivot pin (15) guided in a slot (14), and in order to secure the pin (5), in the closed position an abutment surface (16) on the end face of the cover plate remote from the pin (5) abuts a counter-surface (17) on the casing (2).

2. A trailer coupling according to claim 1, characterised in that the pin (12) for holding the cover plate on the coupling pin (5) constitutes the driving abutment, and preferably a pair of cover plates (13) are disposed on the bearing pin (12) and receive the driving finger (10) of the actuating lever (6) between them.

3. A trailer coupling according to claim 1 or 2, characterised in that the actuating lever (6) has a locking finger (24) which is disposed at a distance above the driving finger (10) and, in the closed position, locks the coupling pin (5) and prevents it from lifting.

4. A trailer coupling according to any of claims 1 to 3, characterised in that the resultant of the bracing forces between the cover plate abutment surface (16) and the counter-surface (17) on the casing is directed beneath the pivot axis (12) of the cover plate on the coupling pin (5).

5. A trailer coupling according to any of claims 1 to 4, characterised in that an abutment pin inserted into the coupling casing constitutes the counter-surface for the cover plate abutment surface.

6. A trailer coupling according to any of claims 1 to 5, characterised in that the actuating lever (6), at its end remote from the driving finger (10), has a locking lug (19) which is lockable in the open position by a resiliently braced locking cam (23) which can be disengaged by the locking lever (18).

## Revendications

1. Dispositif d'attelage de remorque (1), avec un carter d'attelage (2) formant un bec d'attelage (3) et dans lequel un boulon d'attelage (5), s'engageant dans le bec d'attelage (3) est guidé déplaçable et susceptible d'être soulevé, par l'intermédiaire d'un levier d'actionnement (6) équipé d'une manette, à l'encontre de la force d'un ressort, pour passer d'une position de fermeture, traversant le bec d'attelage (3), en une position d'ouverture, libérant le bec d'attelage (3), un levier de sécurité (13) assurant le boulon d'attelage (5) en position de fermeture coopérant avec le levier d'actionnement (6) et, de préférence, un levier de blocage (18), sollicité par un ressort, susceptible de pivoter par l'intermédiaire d'une poignée de déclenchement (20) et/ou d'un bras de déclenchement (21) faisant saillie dans le bec d'attelage (3), en fixant le levier d'actionnement (6) en position d'ouverture,
caractérisé en ce que le levier d'actionnement (6) présente un doigt d'entraînement (10), destiné à s'appliquer directement sur une butée d'entraînement (12) du boulon d'attelage (5) et le levier de sécurité étant prévu à titre d'attache (13), d'une part, susceptible de tourner sur le boulon d'attelage (5), par l'intermédiaire d'un tourillon de palier (12) traversant le boulon d'attelage (5), d'autre part, susceptible de tourner et de se déplacer sur le levier d'actionnement (6), par l'intermédiaire d'un boulon d'articulation (15), guidé en rotation dans un trou oblong (14), l'attache (13) en venant appuyer, en vue d'assurer la sécurité du boulon d'attelage (5), dans la position de fermeture, par une face frontale (16) de sa face frontale opposée au boulon d'attelage, sur une face conjuguée (17) du carter d'attelage (2).

2. Dispositif d'attelage de remorque selon la revendication 1,
caractérisé en ce que le tourillon de palier (12) forme la butée d'entraînement pour le montage à rotation sur le boulon d'attelage (5), les deux attaches (13) recevant entre elles le doigt d'entraînement (10) du levier d'actionnement (6) reposant de préférence sur le tourillon de palier (12).

3. Dispositif d'attelage de remorque selon la revendication 1 ou 2,
caractérisé en ce que le levier d'actionnement (6) présente un doigt de blocage (24), disposé à distance et au-dessus du doigt d'entraînement (10) et s'opposant au boulon d'attelage (5) en position de fermeture, à titre de blocage anti-soulèvement.

4. Dispositif d'attelage de remorque selon l'une des revendications 1 à 3,
caractérisé en ce que la résultante des forces d'appui entre la face d'appui d'attache (16) et la face conjuguée de carter d'attelage (17) passe sous l'axe d'articulation d'attache (12), par le boulon d'attelage (5).

5. Dispositif d'attelage de remorque selon l'une des revendications 1 à 4,
caractérisé en ce qu'un boulon d'appui, inséré dans le carter d'attelage, forme la face conjuguée pour la face d'appui d'attache.

6. Dispositif d'attelage de remorque selon l'une des revendications 1 à 5,
caractérisé en ce que le levier d'actionnement (6) présente, à son extrémité opposée au doigt d'entraînement (10), un ergot de blocage (19), qui, en position d'ouverture, est susceptible d'être encliqueté à l'aide d'un ergot de blocage (23), soutenu élastiquement et pouvant être déployé au moyen du levier de blocage (18).
